# EUROPÄISCHE PATENTSCHRIFT

(11) **EP 1 604 793 B1**
(45) Veröffentlichungstag und Bekanntmachung des Hinweises auf die Patenterteilung: **18.07.2007**
(21) Anmeldenummer: 05104978.1
(22) Anmeldetag: 08.06.2005
(51) Int. Cl.: B28D 1/14, B23B 51/02, E21B 10/46

(54) **Bohrer**
Drill
Foret

(30) Priorität: 09.06.2004 DE 102004028099
(43) Veröffentlichungstag der Anmeldung: 14.12.2005
(73) Patentinhaber: HILTI Aktiengesellschaft, 9494 Schaan (LI)
(72) Erfinder: Koch, Olaf, 86916 Kaufering (DE); Wörz, Joachim, 86899 Landsberg (DE); Hofmann, Karl-Heinz, 86947 Weil (DE); Britten, Werner, 66125 Saarbrücken (DE)
(74) Vertreter: Wildi, Roland

(56) Entgegenhaltungen:
- DE-A1- 4 307 553
- DE-A1- 4 419 641
- DE-A1- 19 724 373

## Beschreibung

### Technisches Gebiet

Die Erfindung betrifft einen Bohrer, insbesondere einen Bohrer für Bohrhämmer zum Bohren von Gestein, Beton oder dergleichen, der im Oberbegriff des Patentanspruchs 1 genannten Art (siehe DE 4419641 und DE 4307553).

### Stand der Technik

Bohrköpfe von Bohrern werden mit Durchtrittsnuten versehen, um dem beim Bohren von den Schneiden gelösten Bohrklein den Übertritt in die Bohrerwendel möglichst ohne Strömungswiderstand zu ermöglichen. Bei kleinen Bohrerdurchmessern im Bereich von 5 mm bis 17 mm weisen die Durchtrittsnuten insbesondere bei einteiligen Bohrköpfen aus einem Hartstoff, wie beispielsweise einem Hartmetall, einen konstanten Querschnitt über die axiale Erstreckung des Bohrkopfes auf.

Nachteilig an diesen Bohrköpfen ist, dass bei der Entstehung und Förderung von Bohrklein eine Änderung der Dichte eintritt, welche zu einer Behinderung der Förderung des anfallenden Bohrkleins führen kann. Des Weiteren tritt insbesondere bei Bohrern mit einem Durchmesser im Bereich von 5 mm bis 17 mm unter den Schneiden eine sekundäre Zerkleinerung ein, welche zu sehr feinem Bohrstaub führt, wenn das anfallende Bohrklein nicht schnell genug im Bohrerwendel abgeführt wird. Dieser Bohrstaub erzeugt grosse Verschmutzungen um und ausserhalb des Bohrlochrandes, was seitens des Anwenders insbesondere bei Arbeiten im Wohn- und Bürobereich zumeist unerwünscht ist.

Aus der US 5,893,688 A ist ein Bohrer mit einem, einen Hartmetalleinsatz aufweisenden Bohrkopf bekannt, bei dem die Wendelnuten bis zum freien, stirnseitigen Ende des Bohrkopfs geführt sind. Diese Lösung ermöglicht eine effiziente Förderung des beim Bohren anfallenden Bohrkleins. Bei einteiligen Bohrköpfen aus Hartstoff, insbesondere im Durchmesserbereich von 5 mm bis 17 mm können aus fertigungstechnischen Gründen die Wendelnuten des Bohrerschafts nicht bis zum freien, stirnseitigen Ende des Bohrkopfs weitergeführt werden.

Aus der GB 2 075 409 A ist ein Bohrer mit einem, einen Hartmetalleinsatz aufweisenden Bohrkopf bekannt, bei dem Durchtrittsnuten gegenüber der axialen Erstreckung des Bohrers abgekippt angeordnet sind. Bei dieser Lösung ist die Förderung des beim Bohren anfallenden Bohrkleins gegenüber einem Bohrkopf mit axial ausgerichteten Durchtrittsnuten verbessert, doch tritt auch bei dieser Lösung eine sekundäre Zerkleinerung auf, was aus den oben genannten Gründen zumeist unerwünscht ist.

### Darstellung der Erfindung

Aufgabe der Erfindung ist es, einen Bohrer mit einem einteiligen Bohrkopf aus Hartstoff zu schaffen, der die oben genannten Nachteile vermeidet und der insbesondere eine effiziente Förderung des anfallenden Bohrkleins bei einer Reduktion der sekundären Zerkleinerung ermöglicht.

Die Aufgabe ist durch die Merkmale des unabhängigen Anspruchs gelöst. Vorteilhafte Weiterbildungen sind in den Unteransprüchen dargelegt.

Gemäss der Erfindung vergrössert sich der Querschnitt der Durchtrittsnuten zumindest bereichsweise in Richtung der Bodenfläche.

Die Querschnittsdifferenzierung der Durchtrittsnuten reduziert den Strömungswiderstand bei der Förderung des beim Bohren anfallenden Bohrkleins, insbesondere beim Übertritt des Bohrkleins in den Bohrerwendel. Zudem wird eine sekundäre Zerkleinerung des schneller durch die Durchtrittsnuten geförderten Bohrkleins weitgehend verhindert. Mit dem erfindungsgemässen Bohrer lässt sich auch bei kleinen Bohrerdurchmessern ab 5 mm die Förderung verbessern und die sekundäre Zerkleinerung reduzieren, da die geschaffene Querschnittsvergrösserung der Durchtrittsnuten analog einem Rückschlagventil für das primär zerkleinerte Bohrklein wirkt und so das anfallende Bohrklein weniger wieder zurück unter die Schneiden gelangen kann. Die Ausgestaltung der Querschnittsvergrösserung der Durchtrittsnuten und somit des Bohrkopfs des erfindungsgemässen Bohrers wird vorteilhaft durch die gewünschte Bohrleisten beziehungsweise in Abhängigkeit des zu bearbeitenden Untergrundes und somit in Abhängigkeit der Art und Eigenschaften des anfallenden Bohrkleins angepasst ausgebildet. Die Querschnittsvergrösserung erfolgt in einer bevorzugten Ausführungsform im Wesentlichen radial in Richtung der axialen Erstreckung des Bohrers und wird auslaufend zu den tangentialen Begrenzungsflächen der jeweiligen Durchtrittsnut geführt. In einer Variante dazu erfolgt die Querschnittsvergrösserung zusätzlich oder ausschliesslich in Richtung der tangentialen Begrenzungsflächen der jeweiligen Durchtrittsnut.

Die Querschnittsvergrösserung wird beispielsweise beim Gradieren des Bohrkopfes aus Hartmetall ausgeformt. In einer Variante dazu kommt ein nicht-primatisches Presswerkzeug mit unterschiedlichem Ober- und Unterstempelquerschnitt zur Fertigung des Hartmetall-Bohrkopfes zum Einsatz, wobei die gewünschte Querschnittsvergrösserung realisiert wird. Alternativ dazu kann der Bohrkopf mit MIM-Technik (Metal-Injection-Molding) ausgeformt werden, wobei die Querschnittsvergrösserung ebenfalls realisierbar ist.

Zudem schafft der Übergang zwischen dem konstanten Querschnitt und dem vergrösserten Querschnitt der Durchtrittsnuten eine definierte Verschleissgrenze für den Bohrer, ab der die Bohrgeschwindigkeit signifikant abfällt. Nach dem Abarbeiten des Übergangs in der Durchtrittsnut vergrössert sich die Wandreibung und die Aufteilung der axialen Schlagkraft in zwei dazu geneigten Einzelkräften wird ungünstiger, da der geschaffene vom Bohrkopf Trichter steiler ausfällt.

Vorzugsweise ist eine tangentiale Übergangskante des Querschnitts der Durchtrittsnuten in einem Abstand zur Bodenfläche vorgesehen, der 10% bis 40% der, von der Spitze bis zur Bodenfläche gemessenen Distanz des Bohrkopfes entspricht. Somit weist die Durchtrittsnut bereichsweise einen konstanten Querschnitt auf, der sich vom freien, stirnseitigen Ende des Bohrkopfes in Richtung der Bodenfläche axial erstreckt sowie einen Bereich mit einem vergrösserten Querschnitt auf, der sich in Richtung der Bodenfläche an die Übergangskante anschliesst.

In einer bevorzugten Ausführungsform ist die Querschnittsvergrösserung der Durchtrittsnuten stetig verlaufend ausgebildet, wobei ein hoher Anteil an Reibschluss die Rückschlagventil-Funktion der Durchtrittsnuten realisiert. Der vergrösserte Querschnitt bildet bereichsweise im Wesentlichen eine Trichternut aus, welche kontinuierlich die radiale Differenz zwischen dem Grund der Wendelnut und dem Bereich der entsprechenden Durchtrittsnut mit einem konstanten Querschnitt ausgleicht. Bei dieser Ausführungsform treten weitgehend vernachlässigbare Turbulenzen in der Strömung des zu fördernden Bohrkleins auf.

In einer alternativen, bevorzugten Ausführungsform ist die Querschnittsvergrösserung der Durchtrittsnuten kegelförmig ausgebildet, wobei die Rückschlagventil-Funktion der Durchtrittsnuten im Wesentlichen über einen Formschluss realisiert wird. Die Durchtrittsnuten weisen beispielsweise einen ersten konstanten Querschnitt vom freien, stirnseitigen Ende des Bohrkopfes bis zur tangentialen Übergangskante und einen zweiten konstanten, gegenüber dem ersten konstanten Querschnitt vergrösserten Querschnitt von der Bodenfläche bis zur kegelförmigen Querschnittsvergrösserung auf. Der Übergangsbereich selbst ist beispielsweise stetig verlaufend ausgebildet. Die axiale Erstreckung der kegelförmig ausgebildeten Querschnittsvergrösserung liegt vorteilhaft im Bereich von 10% bis 60% der, von der Spitze bis zur Bodenfläche des Bohrkopfes gemessenen Distanz, womit eine Strömung des zu fördernden Bohrkleins weitgehend ohne Turbulenzen im Bereich des Übergangs der Querschnitte der Durchtrittsnuten ermöglicht wird.

In einer weiteren alternativen, bevorzugten Ausführungsform ist die Querschnittsvergrösserung der Durchtrittsnuten stufenförmig ausgebildet, wobei ein hoher Anteil an Formschluss die Rückschlagventil-Funktion der Durchtrittsnuten realisiert. Die Durchtrittsnuten weisen beispielsweise einen ersten konstanten Querschnitt vom freien, stirnseitigen Ende des Bohrkopfes bis zur tangentialen Übergangskante und einen zweiten konstanten, gegenüber dem ersten konstanten Querschnitt vergrösserten Querschnitt von der Bodenfläche bis zur stufenförmigen Querschnittsvergrösserung auf. Der Übergangsbereich ist beispielsweise als Absatz ausgebildet. Die axiale Erstreckung der stufenförmig ausgebildeten Querschnittsvergrösserung liegt vorteilhaft im Bereich von 1% bis 10% der, von der Spitze bis zur Bodenfläche des Bohrkopfes gemessenen Distanz, womit allfällige Turbulenzen in der Strömung des zu fördernden Bohrkleins im Bereich des Übergangs der Querschnitte der Durchtrittsnuten überlagert werden können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
- Fig. 1: Eine Aufsicht auf einen Bohrkopf eines erfindungsgemässen Bohrers;
- Fig. 2: einen Schnitt durch eine erste Variante des Bohrkopfes entlang der Linie II - II in Fig. 1;
- Fig. 3: einen Schnitt durch eine zweite Variante des Bohrkopfes entlang der Linie II - II in Fig. 1; und
- Fig. 4: einen Schnitt durch eine weitere Variante des Bohrkopfes entlang der Linie II - II in Fig. 1.

Grundsätzlich sind in den Figuren gleiche Teile mit den gleichen Bezugszeichen versehen.

### Wege zur Ausführung der Erfindung

Der Bohrkopf 10, 20, 30 aus Hartmetall eines erfindungsgemässen Bohrers 1 weist an einem ersten Ende 5 eine Hauptschneide 3 mit einer Spitze 4 und an einem zweiten, dem ersten Ende 5 gegenüberliegenden Ende 6 eine Bodenfläche 7 zur Anordnung des Bohrkopfes an einem Bohrerschaft 8 auf, an welchem der Bohrkopf 10, 20, 30 beispielsweise mittels einer Löt- oder Schweissverbindung festgelegt wird. Der Bohrkopf 10, 20, 30 weist axial verlaufende Durchtrittsnuten 11, 21, 31 zur Abführung von anfallendem Bohrklein auf.

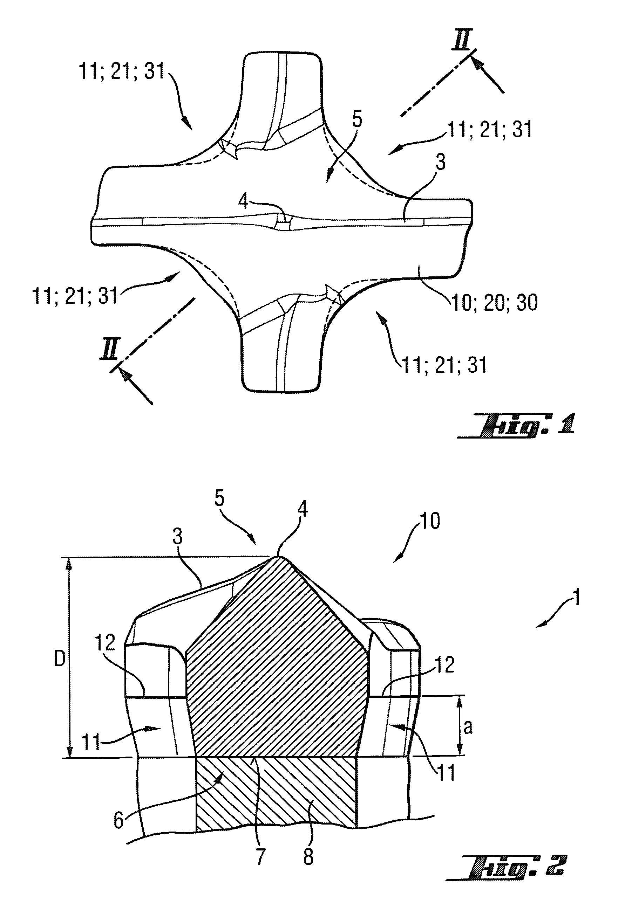

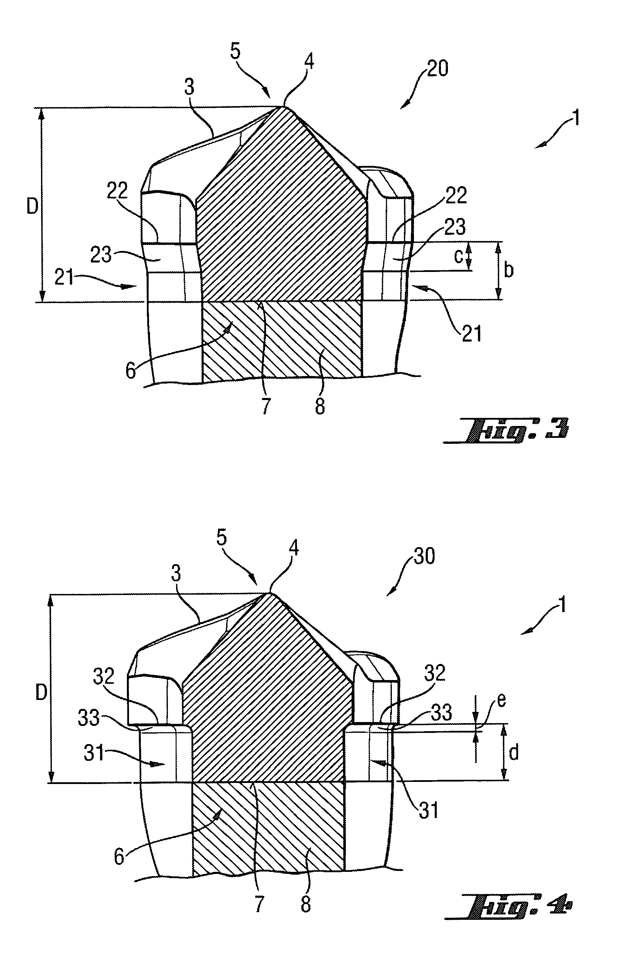

Bei der in Fig. 2 dargestellten Ausführungsform des Bohrers 1 mit dem Bohrkopf 10 ist die Querschnitssvergrösserung der Durchtrittsnuten 11 von der tangentialen Übergangskante 12 stetig verlaufend bis zur Bodenfläche 7 ausgebildet, wobei die Tiefe der Durchtrittsnuten 11, vom äusseren Umfang gemessen, zunimmt. Der axiale Abstand a der Übergangskante 12 zu der Bodenfläche 7 entspricht etwa 30% der, von der Spitze 4 bis zur Bodenfläche 7 gemessenen Distanz D des Bohrkopfes 10.

Bei der in Fig. 3 dargestellten alternativen Ausführungsform des Bohrers 1 mit dem Bohrkopf 20 ist die Querschnitssvergrösserung der Durchtrittsnuten 21 anschliessend an die tangentiale Übergangskante 22 kegelförmig ausgebildet. Der axiale Abstand b der Übergangskante 22 zu der Bodenfläche 7 entspricht etwa 40% der, von der Spitze 4 bis zur Bodenfläche 7 gemessenen Distanz D des Bohrkopfes 20. Die axiale Erstreckung c des kegelförmig ausgebildeten Bereichs 23 entspricht etwa 20% der, von der Spitze 4 bis zur Bodenfläche 7 gemessenen Distanz D des Bohrkopfes 20.

In Fig. 4 ist eine weitere alternative Ausführungsform des Bohrers 1 mit dem Bohrkopf 30 dargestellt, bei der die Querschnitssvergrösserung der Durchtrittsnuten 31 anschliessend an die tangentiale Übergangskante 32 stufenförmig ausgebildet. Der axiale Abstand d der Übergangskante 32 zu der Bodenfläche 7 entspricht etwa 35% der, von der Spitze 4 bis zur Bodenfläche 7 gemessenen Distanz D des Bohrkopfes 30. Die axiale Erstreckung e des stufenförmig ausgebildeten Bereichs 33 entspricht 1% bis 10% der, von der Spitze 4 bis zur Bodenfläche 7 gemessenen Distanz D des Bohrkopfes 30.

## Patentansprüche

1. Bohrer, insbesondere Bohrer (1) für Bohrhämmer zum Bohren von Gestein, Beton oder dergleichen, mit einem einteiligen Bohrkopf (10; 20; 30) aus Hartstoff, der an einem ersten Ende (5) zumindest eine, eine Spitze (4) aufweisende Hauptschneide (3) und an einem, dem ersten Ende (5) gegenüberliegenden zweiten Ende (6) eine Bodenfläche (7) zur Anordnung des Bohrkopfes (10; 20; 30) an einem Bohrerschaft (8) aufweist, wobei der Bohrkopf (10; 20; 30) axial verlaufende Durchtrittsnuten (11; 21; 31) zur Abführung von anfallendem Bohrklein aufweist, **dadurch gekennzeichnet, dass** sich der Querschnitt der Durchtrittsnuten (11; 21; 31) zumindest bereichsweise in Richtung der Bodenfläche (7) vergrössert.

2. Bohrer nach Anspruch 1, **dadurch gekennzeichnet, dass** eine tangentiale Übergangskante (12; 22; 32) des Querschnitts der Durchtrittsnuten (11; 21; 31) in einem Abstand zur Bodenfläche (7) vorgesehen ist, der 10% bis 40% der, von der Spitze (4) bis zur Bodenfläche (7) gemessenen Distanz (D) des Bohrkopfes (10; 20; 30) entspricht.

3. Bohrer nach Anspruch 1 oder 2, **dadurch gekennzeichnet, dass** die Querschnittsvergrösserung der Durchtrittsnuten (11) stetig verlaufend ausgebildet ist.

4. Bohrer nach Anspruch 1 oder 2, **dadurch gekennzeichnet, dass** die Querschnittsvergrösserung der Durchtrittsnuten (21) kegelförmig ausgebildet ist.

5. Bohrer nach Anspruch 1 oder 2, **dadurch gekennzeichnet, dass** die Querschnittsvergrösserung der Durchtrittsnuten (31) stufenförmig ausgebildet ist.

## Claims

1. Drill bit, in particular a bit (1) for hammer drills for drilling rock, concrete or the like, with a one-piece carbide head (10; 20; 30) which at a first end (5) has at least one active edge with a point (4) and at a second end (6) opposite the first end (5) has a bottom face (7) for mounting the head (10; 20; 30) on a drill shank (8), wherein the head (10; 20; 30) has axially extending transfer flutes (11; 21; 31) for removal of drillings, **characterized in that** the cross-section of the transfer flutes (11; 21; 31) increases, at least locally, towards the bottom face (7).

2. Drill bit according to Claim 1, **characterized in that** a tangential transition edge (12; 22; 32) of the cross-section of the transfer flutes (11; 21; 31) is provided at a distance from the bottom face (7) equal to 10% to 40% of the distance (D) measured from the point (4) to the bottom face (7).

3. Drill bit according to Claim 1 or Claim 2, **characterized in that** the increase in cross-section of the transfer flutes (11) is continuous.

4. Drill bit according to Claim 1 or Claim 2, **characterized in that** the increase in cross-section of the transfer flutes (21) is conical.

5. Drill bit according to Claim 1 or Claim 2, **characterized in that** the increase in cross-section of the transfer flutes (31) is stepped.

## Revendications

1. Foret, en particulier foret (1) pour marteaux perforateurs destinés à forer la roche, le béton ou analogues, comprenant une tête de forage d'un seul tenant (10 ; 20 ; 30) en substance dure qui comporte, à une première extrémité (5), au moins un taillant principal (3) muni d'une pointe (4) et, à une seconde extrémité (6) située à l'opposé de la première extrémité (5), une surface de fond (7) pour monter la tête de forage (10 ; 20 ; 30) sur une tige de foret (8), la tête de forage (10 ; 20 ; 30) comportant des gorges de passage axiales (11 ; 21 ; 31) pour évacuer les débris de forage produits, **caractérisé en ce que** la section transversale des gorges de passage (11 ; 21 ; 31) croît au moins par endroits en direction de la surface de fond (7).

2. Foret selon la revendication 1, **caractérisé en ce qu'**une arête tangentielle de transition (12 ; 22 ; 32) de la section transversale des gorges de passage (11 ; 21 ; 31) est prévue à une distance de la surface de fond (7) qui correspond à 10 % à 40 % de la dimension (D) de la tête de forage (10 ; 20 ; 30) mesurée de la pointe (4) à la surface de fond (7).

3. Foret selon la revendication 1 ou 2, **caractérisé en ce que** l'accroissement de section transversale des gorges de passage (11) est continu.

4. Foret selon la revendication 1 ou 2, **caractérisé en ce que** l'accroissement de section transversale des gorges de passage (21) est conique.

5. Foret selon la revendication 1 ou 2, **caractérisé en ce que** l'accroissement de section transversale des gorges de passage (31) est étagé.
